# FASCICULE DE BREVET EUROPEEN

(11) **EP 3 933 379 B1**
(45) Date de publication et mention de la délivrance du brevet: **29.05.2024**
(21) Numéro de dépôt: 21182429.7
(22) Date de dépôt: 29.06.2021
(51) Int. Cl.: G01N 15/14, G01N 21/53

(54) **CAPTEUR OPTIQUE DE PARTICULES**
OPTISCHER TEILCHENSENSOR
OPTICAL PARTICLE SENSOR

(30) Priorité: 30.06.2020 FR 2006905
(43) Date de publication de la demande: 05.01.2022
(73) Titulaire: COMMISSARIAT A L'ENERGIE ATOMIQUE ET AUX ENERGIES ALTERNATIVES, 75015 Paris (FR)
(72) Inventeur: MAINDRON, Tony, 38054 GRENOBLE (FR); BOUTAMI, Salim, 38054 GRENOBLE (FR); KOPP, Christophe, 38054 GRENOBLE (FR)
(74) Mandataire: Hautier IP

(56) Documents cités:
- US-A1- 2015 253 236
- US-B2- 8 681 331

## Description

### DOMAINE TECHNIQUE

La présente invention concerne le domaine de la détection optique de particules en général et plus particulièrement de particules de taille micrométrique, voire nanométrique. Elle trouve par exemple pour application le comptage optique de particules.

Des domaines d'application particulièrement avantageux, mais non limitatifs sont par exemple : le contrôle de la qualité de l'air, la détection d'espèces microbiologiques, la détection de poudre d'explosifs, la détection des incendies, les systèmes d'alarme peu sensibles aux faux positifs.

### ETAT DE LA TECHNIQUE

Les particules sont des objets microscopiques solides, liquides ou solides mouillés en suspension dans l'air. Leurs tailles varient de quelques dizaines de nanomètres à quelques dizaines de micromètres. Ces particules proviennent de sources variées telles que des incendies de forêts, des sites de construction, des sites industriels, des véhicules motorisés etc.

Lorsque la concentration de ces particules dépasse un certain seuil, elles ont un impact néfaste sur l'environnement et/ou la santé. Ainsi, des états ont fixé des seuils de concentration maximale. Par exemple, l'Union Européenne permet des concentrations maximales de 50 µg/m3 pour les particules de taille comprise entre 10 µm et 2.5 µm et de 25 µg/m3 pour les particules de taille inférieure à 2.5 µm.

Il est donc nécessaire de détecter avec précision la présence et la concentration de ces particules par gamme de taille.

Différentes méthodes de détection de particules existent, telles que les méthodes de détection par gravimétrie, par ionisation, par atténuation bêta, les méthodes de détection par mesure de mobilité aérodynamique ou de mobilité électrique, les méthodes de détection optiques.

Ces dernières sont avantageusement plus simples à mettre en oeuvre, et plus répandues.

Les capteurs optiques de particules sont généralement basés sur la détection d'une interaction entre une lumière et des particules. En pratique, les particules à détecter passent dans une zone éclairée par une source de lumière, typiquement un canal.

Si des particules sont présentes dans la zone éclairée, celles-ci vont absorber une partie de la lumière qui provient de la source et vont diffuser une autre partie de cette lumière hors de la direction principale de propagation, selon le phénomène de diffusion.

Une première méthode de détection optique, dite mesure d'obscuration, consiste donc à mesurer l'absorption de la lumière à travers un nuage de particules ou une accumulation de particules. Cette mesure permet de déterminer la concentration des particules à l'aide de la loi de Beer-Lambert si on connait a priori la composition du nuage de particules.

Une deuxième méthode consiste à analyser la lumière diffusée hors de l'axe optique. L'analyse angulaire de la lumière diffusée se fait à partir de l'enregistrement d'un diagramme de diffusion. Elle permet de déterminer la forme, la taille, l'indice optique et la concentration des particules. Par exemple, la taille, l'indice de réfraction et la concentration de particules peuvent être déterminées à partir des théories de diffusion de la lumière, par exemple la théorie de Mie (Réf : Bohren et Huffmann, Absorption and scatte-ring of light by small particles, Ed. Wiley and Sons, 1983).

Une solution divulguée par le document US2015253236 A1 consiste à analyser la lumière rétrodiffusée dans un canal d'eaux usées. La turbidité importante des eaux usées requiert une analyse en rétrodiffusion via des fibres optiques disposées sur un côté du canal.

Les compteurs optiques de particules fonctionnent sur les principes cités ci-dessus. Ils ont pour particularité que la zone éclairée est limitée géométriquement, par exemple par focalisation d'une source laser et/ou par un canal micro-fluidique et/ou par un système de lentilles aérodynamiques. Cette limitation géométrique permet de détecter des particules uniques plutôt que des nuages.

Une solution permettant de réaliser de tels compteurs ou capteurs optiques de particules en améliorant leur robustesse et en réduisant leur coût consiste à intégrer ces compteurs/capteurs dans des puces miniaturisées à l'aide des technologies de la microélectronique et de la photonique.

Le document FR3062209 décrit un tel capteur intégré. Ce capteur comprend notamment un assemblage discret de photodétecteurs formant une rétine ainsi que des surfaces réfléchissantes pour projeter sur la rétine l'image de la lumière diffusée par la ou les particules. Un diagramme de diffusion caractéristique de la particule est ainsi obtenu.

En pratique, il s'avère que la sensibilité de ce type de capteur est limitée et que des particules, notamment celles de petites tailles, peuvent ne pas être détectées.

Il existe donc un besoin consistant à améliorer la sensibilité des capteurs de particules, et en particulier pour la détection des particules de petite taille. Une détection fiable de ces petites particules est un enjeu important puisque celles-ci sont généralement les plus dangereuses pour la santé.

Un objet de la présente invention est de proposer un tel capteur de particules permettant d'améliorer la détection de petites particules.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre ces objectifs, l'invention est exposée dans le jeu de revendications joint

Avantageusement, l'au moins une source présente une face d'émission tournée vers un côté du capteur et l'au moins un photodétecteur présente une face de réception tournée vers le même côté du capteur, de sorte que les rayons lumineux reçus par l'au moins un photodétecteur sont des rayons lumineux rétrodiffusés par l'au moins une particule, pour au moins 90% d'entre eux.

Ainsi, la majorité voire la totalité des rayons lumineux détectés par le capteur sont des rayons lumineux rétrodiffusés par l'au moins une particule. Un tel capteur réduit considérablement ou supprime la part des rayons lumineux non diffusés qui ne portent pas d'information relative à l'au moins une particule, et qui sont susceptibles d'éblouir l'au moins un photodétecteur.

Dans le cadre du développement de la présente invention, il est en effet apparu que, dans le capteur de l'art antérieur décrit dans le document FR3062209 mentionné ci-dessus, une partie des rayons lumineux qui ne sont pas diffusés par les particules et qui ne sont donc pas utiles à la détection des particules, éblouit le capteur. Cet éblouissement peut empêcher totalement la détection des petites particules.

En éclairant une particule par des rayons lumineux incidents émis par une face d'émission d'une source, une partie des rayons diffusés par la particule est diffusée « en avant » de la particule, de façon à s'éloigner de la face d'émission, dans le sens de propagation des rayons incidents, tandis qu'une autre partie des rayons diffusés est rétrodiffusée, « en arrière » de la particule, de façon à revenir du côté de la face d'émission, dans le sens opposé au sens de propagation des rayons incidents.

L'intensité de la partie « rétrodiffusée » est généralement plus faible que celle de la partie diffusée « frontalement » (dans le sens de propagation ou en avant de la particule).

Les rayons non diffusés par la particule se propagent quant à eux dans le sens de propagation, à moins qu'ils ne soient réfléchis en direction de la face d'émission, par exemple par un miroir.

En tournant la face d'émission et la face de détection du même côté du capteur, les seuls rayons lumineux reçus par l'au moins un photodétecteur sont donc soit des rayons rétrodiffusés par la particule, soit des rayons réfléchis, par exemple par une paroi du capteur.

Selon un préjugé de l'art antérieur, les seuls rayons rétrodiffusés ne permettent pas de collecter suffisamment d'information sur la particule et il est donc nécessaire de collecter également les rayons diffusés frontalement, par exemple en utilisant un miroir.

Au contraire, il a été mis en évidence lors du développement de la présente invention que le fait de collecter majoritairement voire uniquement les rayons lumineux rétrodiffusés par la particule (signal) permet non seulement d'obtenir suffisamment d'information sur la particule mais aussi réduit drastiquement ou supprime l'éblouissement dû aux réflexions parasites des rayons non diffusés (bruit). Le capteur optique selon l'invention permet ainsi de réduire très significativement l'éblouissement de l'au moins un photodétecteur. Le rapport signal sur bruit du capteur est augmenté. Cela améliore la sensibilité du capteur et la capacité de détection des petites particules.

Par ailleurs, les petites particules, présentant typiquement un diamètre inférieur à 10 µm voire inférieur à 1 µm, diffusent la lumière de façon isotrope, dans toutes les directions de l'espace. La partie de lumière « rétrodiffusée » par ces petites particules est donc sensiblement égale à la partie de lumière diffusée « frontalement » par ces petites particules. Les plus grosses particules diffusent proportionnellement moins de lumière « rétrodiffusée » que de lumière diffusée « frontalement ». Pour autant, les plus grosses particules diffusent en absolu plus de lumière que les petites particules. Le niveau d'intensité de lumière « rétrodiffusée » par les grosses particules est ainsi au moins aussi élevé que le niveau d'intensité de lumière « rétrodiffusée » par les petites particules. Le capteur selon l'invention permet donc de détecter à la fois les petites particules et les plus grosses particules, avec une pondération favorable à la détection des petites particules.

Ainsi, la présente invention propose une solution efficace pour améliorer les capteurs actuels, en particulier pour améliorer la détection des petites particules d'un diamètre typiquement inférieur à 10 µm.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1 illustre schématiquement un capteur de particules selon un mode de réalisation de la présente invention.
La FIGURE 2A illustre schématiquement en coupe un émetteur comprenant une structure de déviation selon un mode de réalisation de la présente invention.
La FIGURE 2B présente une variation d'angle d'émission en fonction de la hauteur de la structure de déviation de l'émetteur illustré à la figure 2A.
La FIGURE 3A illustre schématiquement en coupe une pluralité d'émetteurs associée à une structure de déviation selon un autre mode de réalisation de la présente invention.
La FIGURE 3B présente une indicatrice d'émission pour des émetteurs lambertiens standard.
La FIGURE 3C présente une indicatrice d'émission pour les émetteurs illustrés à la figure 3A.
Les FIGURES 4A à 4C illustrent schématiquement un capteur de particules selon différents modes de réalisation de la présente invention.
Les FIGURES 5A à 5D illustrent schématiquement un capteur de particules selon d'autres modes de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différents éléments (particules, émetteur, canal, photodétecteur) ne sont pas représentatives de la réalité.

### DESCRIPTION DÉTAILLÉE

Avant d'entamer une revue détaillée de modes de réalisation de l'invention, il est rappelé que, de manière facultative, l'invention comprend au moins l'une quelconque des caractéristiques optionnelles suivantes qui peuvent être utilisées en association ou alternativement.

Selon un exemple, le capteur optique est configuré de sorte que les rayons lumineux reçus par l'au moins un photodétecteur sont uniquement des rayons lumineux rétrodiffusés par l'au moins une particule. Cela permet d'éviter l'éblouissement du photodétecteur par des rayons lumineux parasites, notamment des rayons lumineux non diffusés et réfléchis.

Selon un exemple, le capteur optique est configuré de sorte que les rayons lumineux reçus par l'au moins un photodétecteur ne sont pas réfléchis après avoir été diffusés par l'au moins une particule. Cela permet d'éviter le recours à un miroir. Le coût du capteur est diminué.

Selon un exemple, le capteur optique comprend des parois qui délimitent un volume à l'intérieur duquel s'étend le canal et se propagent les rayons lumineux émis par l'au moins une source. Lesdites parois, par exemple leur revêtement et/ou leur état de surface, sont typiquement configurées de sorte à empêcher que des rayons lumineux non diffusés par l'au moins une particule ne parviennent à l'au moins un photodétecteur, pour au moins 95% d'entre eux. Cela permet de limiter voire supprimer d'éventuelles réflexions parasites sur les parois.

Selon un exemple, les parois sont configurées de sorte que les rayons lumineux reçus par l'au moins un photodétecteur sont des rayons lumineux rétrodiffusés par l'au moins une particule, pour au moins 90% d'entre eux.

Selon un exemple, les parois absorbent au moins 95% des rayons lumineux non diffusés par l'au moins une particule. Cela permet de limiter voire supprimer d'éventuelles réflexions parasites sur les parois.

Selon un exemple, les parois en regard de la face d'émission sont éloignées des photodétecteurs d'une distance supérieure à 10 mm, de préférence supérieure à 20 mm, de préférence supérieure à 50 mm. Cela permet de diminuer le nombre de rayons lumineux non diffusés atteignant les parois. Cela permet de limiter voire supprimer d'éventuelles réflexions parasites sur les parois.

Selon un exemple, les parois ne sont pas parallèles à la face d'émission. Cela permet de dévier d'éventuelles réflexions parasites se produisant sur les parois, en dehors des directions de détection des photodétecteurs. Cela permet d'éviter que d'éventuels rayons lumineux non diffusés par la particule et réfléchis par les parois n'atteignent la face de détection.

Les faces d'émission et de réception sont parallèles entre elles. Cela simplifie la conception du capteur.

Selon un exemple, les faces d'émission et de réception sont planes et situées sensiblement dans un même plan. Cela permet d'optimiser la quantité de signal reçue par la face de détection, pour une puissance d'émission donnée au niveau de la face d'émission. La sensibilité du capteur est améliorée.

Selon un exemple, la ou les faces de réception correspondent à la surface du ou des photodétecteurs. Le capteur optique ne comprend pas de fibres optiques ou de guide d'onde entre la face de réception et la surface du photodétecteur. Selon une possibilité alternative ou en combinaison, la ou les faces d'émission correspondent à la surface de la ou des sources ou émetteurs. De façon similaire, le capteur optique ne requiert donc pas et ne comprend pas de fibres optiques ou de guide d'onde entre la face d'émission et la surface de la source. L'absence de telles fibres optiques ou de tels guides d'onde permet avantageusement de réduire le coût du capteur optique. Cela permet également d'améliorer la compacité du capteur optique.

Selon un exemple, les faces d'émission et de réception sont entièrement contenues dans un espace délimité par deux plans parallèles, le capteur optique étant configuré de sorte que l'au moins une particule soit située en dehors de cet espace lorsqu'elle diffuse les rayons lumineux.

L'au moins une source et l'au moins un capteur sont disposés autour de l'au moins un canal et transversalement audit au moins un canal. Selon un exemple lesdites faces d'émission et de réception sont contenues dans des plans disposés transversalement audit au moins un canal.

Selon un exemple, l'au moins une source entoure entièrement l'au moins un canal, l'au moins une source étant prise parmi une unique source ou une pluralité de sources. Cela permet d'homogénéiser l'éclairage du canal.

Selon un exemple, l'au moins une source comprend une pluralité de sources et les sources sont réparties de manière continue autour du canal. Cela signifie que les sources sont juxtaposés les unes aux autres, autour du canal.

Selon un exemple, l'au moins un photodétecteur comprend une pluralité de détecteurs de lumière, et les détecteurs sont répartis de manière continue autour du canal. Cela signifie que les détecteurs sont juxtaposés les uns aux autres, autour du canal.

Selon un exemple, les sources et les détecteurs sont répartis de manière continue autour du canal. Cela signifie que les sources et les détecteurs sont juxtaposés les uns aux autres, autour du canal. Les sources et les détecteurs ne sont pas nécessairement répartis de manière régulière ou en alternance régulière. Ils forment ensemble une continuité autour du canal.

Selon un exemple, l'au moins une source comprend une pluralité de sources et les sources sont réparties de manière discontinue autour du canal. Cela signifie que les sources sont disposées autour du canal en étant séparées les unes des autres par un espace.

Selon un exemple, l'au moins un photodétecteur comprend une pluralité de détecteurs de lumière, et les détecteurs sont répartis de manière discontinue autour du canal. Cela signifie que les détecteurs sont disposés autour du canal en étant séparés les uns des autres par un espace.

Selon un exemple, les sources et les détecteurs sont répartis de manière discontinue autour du canal. Cela signifie que les sources et les détecteurs sont disposés autour du canal en étant séparés les uns des autres par un ou des espaces.

Selon un exemple, l'au moins une source présente une forme d'anneau ou de portion d'anneau entourant au moins partiellement l'au moins un canal.

Selon un exemple, l'au moins une source est disposée le long d'un premier circuit autour de l'au moins un canal, et l'au moins un capteur est disposé le long d'un deuxième circuit autour de l'au moins un canal, lesdits premier et deuxième circuits étant agencés de façon concentrique autour de l'au moins un canal. Cela permet d'optimiser l'éclairage du canal et la détection du signal.

Selon un exemple, le capteur optique comprend une structure de déviation et les rayons lumineux émis par l'au moins une source sont déviés vers l'au moins un canal par la structure de déviation. Cela permet d'améliorer l'éclairage du canal.

Selon un exemple, la structure de déviation est formée sur la face d'émission et présente un gradient d'indice de réfraction dans un plan parallèle à la face d'émission. Une telle structure de déviation peut être facilement réalisée par les technologies de la microélectronique.

Selon un exemple, la structure de déviation est choisie parmi un cristal photonique, une microlentille réfractive.

Selon un exemple, l'au moins une source comprend au moins deux émetteurs de lumière adjacents comprenant chacun une cavité d'émission présentant de hauteur différente.

Selon un exemple, la structure de déviation est formée par la différence de hauteurs entre les cavités d'émission desdits au moins deux émetteurs de lumière adjacents. Une telle structure de déviation peut être facilement réalisée par les technologies de la microélectronique. Elle permet de dévier efficacement la lumière émise, par exemple de plusieurs dizaines de degré par rapport à l'axe optique.

Selon un exemple, l'au moins une source est une diode électroluminescente organique (OLED). Cela permet de réaliser des formes de source variées.

Selon un exemple, l'au moins un photoétecteur est un photodétecteur organique (OPD). Cela permet de réaliser des formes de photodétecteur variées.

Selon un exemple, l'au moins une source est une diode électroluminescente inorganique (LED), par exemple à base de GaN. Selon un exemple une telle diode est une micro-diode (µLED) et présente une dimension caractéristique inférieure à 100 µm, de préférence inférieure à 50 µm, voire inférieure à 30 µm.

Selon un exemple, l'au moins un photoétecteur est un photodétecteur inorganique (PD), par exemple à base de silicium.

Selon un exemple, l'au moins une source comprend une pluralité d'émetteurs de lumière, lesdits émetteurs étant agencés sous forme d'une matrice d'émission.

Selon un exemple, l'au moins un photodétecteur comprend une pluralité de détecteurs de lumière, lesdits détecteurs étant agencés sous forme d'une matrice de détection.

Selon un exemple, les matrices d'émission et de détection sont agencées de sorte que les émetteurs de lumière soient alternés avec les détecteurs de lumière. Cela permet d'optimiser l'éclairage du canal et la détection du signal.

Selon un exemple, l'au moins une source comprend plusieurs émetteurs de lumière et l'au moins un photodétecteur comprend plusieurs détecteurs de lumière, les émetteurs et les détecteurs étant agencés sous forme d'une matrice présentant des cellules, chaque cellule étant formée par un émetteurs ou un détecteur.

Selon un exemple, tous les détecteurs sont séparés les uns des autres par des émetteurs.

Selon un exemple tous les émetteurs sont séparés les uns des autres par des détecteurs.

Selon un exemple, la pluralité d'émetteurs de lumière comprend des premier, deuxième et troisième sous-ensembles d'émetteurs de lumière, les émetteurs de lumière desdits sous-ensembles étant configurés pour émettre des rayonnements lumineux présentant respectivement des première, deuxième et troisième longueurs d'onde différentes entre elles. Cela permet d'obtenir différentes informations sur la particule à détecter, par exemple sa nature ou sa taille.

Selon un exemple, le capteur est configuré de façon à ce que les émetteurs de lumière puissent être allumés ou éteints séquentiellement. Cela permet d'obtenir différentes informations sur la particule à détecter, par exemple sa position dans le canal.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, le nombre, la forme ou la nature des canaux, des émetteurs et/ou des photodétecteurs illustrés sur les figures peuvent être combinés de manière à former un autre mode de réalisation qui n'est pas nécessairement illustré ou décrit. Un tel mode de réalisation n'est évidemment pas exclu de l'invention.

La présente invention trouve pour domaine préférentiel d'application la détection de particules de diverses tailles, de préférence dans le domaine des particules microscopiques, voire nanométriques. Par exemple la présente invention peut servir à la détection de particules issues de fumées, de poudre d'explosifs, de particules polluantes, de particules de poussière, de particules d'allergènes telles que les pollens, les spores de moisissure, ou encore de particules cancérigènes, ou des particules biologiques telles que des bactéries, des virus, ou encore des exosomes.

La présente invention s'applique à tout type de particules véhiculées par un fluide, que celui-ci soit liquide et/ou gazeux.

Le fluide présent ou s'écoulant dans le canal est par exemple de l'air. Tel est le cas pour les capteurs intégrés dans les systèmes suivants : un système d'alarme anti-incendie, un système de détection d'incendie, un système de détection de poudre d'explosifs, un système d'analyse de la qualité d'un fluide tel que l'air, un système d'alarme anti-pollution.

Alternativement, le fluide peut être un liquide tel que de l'eau. Tel est le cas pour les capteurs intégrés dans les systèmes de détection d'espèces microbiologiques.

Dans le cadre de la présente invention, le terme « particule » ou ses équivalents a pour définition un constituant d'un système physique considéré comme élémentaire par rapport aux propriétés étudiées.

Le terme particule désigne en particulier un objet solide, liquide ou solide mouillé en suspension dans un fluide tel que l'air et dont la taille est microscopique. Par exemple, une particule est un élément de matière dont la plus grande dimension est inférieure à quelques millimètre (10⁻³ mètres), de préférence à un millimètre, et de préférence à quelques dizaines de micromètres (10⁻⁶ mètres) et de préférence inférieure au micromètre, voire de l'ordre du nanomètre (10⁻⁹ m). Plus généralement, les particules présentent une taille supérieure à 40 Å (10⁻¹⁰ m) et sont donc considérées comme optiquement continue. De manière générale, il s'agit d'objets composés de matière dont les dimensions sont petites par rapport aux dimensions de la cavité ou du canal de circulation des particules.

On entend par « taille » ou « diamètre » d'une particule la distance maximale entre deux points de la particule. Typiquement, on assimile une particule à un objet de géométrie sphérique, sa taille correspond donc au diamètre de la sphère.

Dans le cadre de la présente invention, le terme « autour » signifie « entoure au moins 50%, de préférence au moins 80%, de préférence entoure entièrement le canal ».

Dans ce qui suit, le terme « absorption » ou ses équivalents se réfère au phénomène par lequel l'énergie d'une onde électromagnétique est transformée en une autre forme d'énergie, par exemple par dissipation thermique. Dans la présente description, un matériau est considéré comme absorbant dès lors qu'il absorbe au moins 5% d'un rayonnement lumineux, de préférence au moins 25% et avantageusement au moins 50%.

Dans ce qui suit, le terme « diffusion » ou ses équivalents se réfère au phénomène par lequel un milieu de propagation produit une répartition, dans de nombreuses directions, de l'énergie d'une onde électromagnétique, lumineuse par exemple.

Dans ce qui suit, le terme « réflexion » ou ses équivalents se réfère au phénomène de réémission depuis un élément ou une surface d'un rayonnement lumineux incident. Dans la présente description, un élément est considéré comme réfléchissant dès lors qu'il réémet une partie au moins d'un rayonnement lumineux incident, cette partie étant supérieure ou égale à 50%, de préférence cette partie étant supérieure ou égale à 80%.

Dans la présente invention, un principe essentiel consiste à détecter des rayons lumineux « rétrodiffusés ». On entend par « rétrodiffusé » ou « rétrodiffusion » un ensemble de rayons lumineux diffusés par la particule qui se dirigent du côté de la source d'où ils proviennent. On peut ainsi se figurer que ces rayons lumineux rétrodiffusés rebroussent chemin. De façon générale, la rétrodiffusion se produit dans le demi-espace délimité par un plan comprenant la particule, typiquement le centre de la particule, ce plan étant perpendiculaire à la direction d'émission principale de la source. Ainsi, la rétrodiffusion ne se limite pas aux seuls rayons diffusés selon la direction des rayons incidents et dans un sens opposé aux rayons incidents. Les rayons rétrodiffusés peuvent également être vus comme des rayons réfléchis par la particule dans le demi-espace comprenant la source.

Les rayons rétrodiffusés ne sont pas réfléchis vers les détecteurs par une paroi, un miroir ou un réflecteur, ou quelque structure que ce soit (grille métallique ou autre). Ils peuvent néanmoins être légèrement déviés, par exemple par réfraction, lors de leur retour en direction des photodétecteurs.

La pluralité de photodétecteurs se présente de préférence typiquement sous forme d'une ou plusieurs matrices de photodétecteurs, également désignées matrices de détection. Les photodétecteurs constituent alors des pixels du capteur. Ces matrices de détection sont de préférence maintenues à proximité du canal, éventuellement par un support transparent.

Dans la présente invention, une « face de réception » et une « face de détection » sont employées en synonymes.

Le champ de vue est l'angle solide pour lequel le capteur est sensible aux rayonnements électromagnétiques.

Les rayons lumineux sont émis par une ou plusieurs sources, encore appelées émetteurs. Une pluralité de sources se présente de préférence typiquement sous forme d'une ou plusieurs matrices d'émission. Les sources constituent alors des pixels ou des sous-pixels de la matrice d'émission. Ces matrices d'émission sont de préférence maintenues à proximité du canal, éventuellement par un support transparent.

On entend par un matériau « transparent à une longueur d'onde donnée » ou simplement « transparent » un matériau laissant passer au moins 90% de l'intensité lumineuse de la lumière présentant cette longueur d'onde.

Les sources peuvent être polychromatiques ou monochromatiques. La lumière émise par ces sources appartient de préférence au domaine visible étendu au proche ultra-violet et au proche infrarouge, c'est-à-dire pour une gamme de longueur d'onde comprise entre 300 et 1000 nm. La « longueur d'onde » de la source désigne une longueur d'onde d'intérêt, par exemple la longueur d'onde présentant la plus grande intensité lumineuse ou la longueur d'onde centrale du spectre d'émission de la source.

Dans le cas d'une source polychromatique, cette longueur d'onde d'intérêt peut également s'entendre d'une gamme de longueurs d'ondes de quelques dizaines de nanomètres, par exemple de l'ordre de 100nm, de préférence de l'ordre de 50nm.

Dans le cas d'une source monochromatique ou quasi-monochromatique, la longueur d'onde d'intérêt est l'unique longueur d'onde émise par cette source ou la longueur d'onde principalement émise par cette source.

L'émission de la source lumineuse peut être caractérisée par la courbe I = f(θ) donnant la valeur de l'intensité I en fonction de la direction d'observation selon l'angle θ. Cette courbe polaire est généralement nommée indicatrice d'intensité en émission ou indicatrice d'émission.

L'intensité lumineuse émise par une source dite lambertienne varie typiquement selon la direction d'observation. Dans le cas d'une telle source quasi-ponctuelle, i.e. de petite taille vis-à-vis de la distance d'observation, et présentant une face d'émission plane, son indicatrice d'émission est la sphère d'équation I = I0.cos(θ).

Deux surfaces sont dites parallèles si toute normale à l'une est une normale à l'autre et si la distance entre deux points appartenant à chacune des deux surfaces et à une même normale commune aux deux surfaces, est constante.

Une face peut typiquement être une portion de surface. Ainsi deux faces parallèles sont deux portions de surfaces qui sont elles-mêmes parallèles. Des première et deuxième faces parallèles entre elles peuvent ainsi être disposées en décalage l'une de l'autre de sorte que la projection de la première face sur la surface à laquelle appartient la deuxième face ne recouvre pas nécessairement ladite deuxième face. Ces faces dites parallèles peuvent par exemple être situées sur deux plans parallèles entre eux, sans que l'une occulte l'autre pour un observateur situé en regard de ces faces parallèles.

Dans le cadre de la présente invention, les photodétecteurs et les émetteurs sont tournés vers un même côté du capteur. Ce côté est situé à l'opposé des faces de détection et d'émission, par rapport à la particule. Cela signifie que les photodétecteurs détectent des rayons et que les émetteurs émettent des rayons sensiblement dans le même demi-espace, ce demi-espace étant délimité par un plan passant par la face de détection et/ou la face démission.

Selon un exemple, les faces d'émission des émetteurs et les faces de réception des photodétecteurs sont situées, de préférence toutes, dans un même demi-espace du capteur. Ce demi-espace est délimité par un plan passant par la portion d'espace dans laquelle une particule peut être présente et diffuser un rayon lumineux émis par un émetteur.

Selon un exemple, les faces d'émission des émetteurs et les faces de réception des photodétecteurs sont parallèles entre elles et parallèles audit plan. Selon un autre exemple, ce plan est parallèle à une face inférieure d'un substrat supportant les émetteurs et les récepteurs. Selon un autre exemple, ce plan est perpendiculaire à une direction selon lequel le canal s'étend principalement. Ce plan est perpendiculaire à une direction principale d'écoulement du fluide transportant l'au moins une particule.

On entend par un élément structurel, une couche, « à base » d'un matériau A, un élément structurel, une couche comprenant ce matériau A uniquement ou ce matériau A et éventuellement d'autres matériaux, par exemple des éléments dopants ou des éléments d'alliage. Ainsi, si un émetteur ou un détecteur est désigné comme étant « à base de matière organique ou de polymères », cela signifie qu'il peut être formé uniquement de polymères, ou principalement de polymères et éventuellement d'autres matériaux, par exemple une fine couche d'oxyde inorganique ou de métal.

Il est précisé que dans le cadre de la présente invention, les termes « sur », « surmonte », « recouvre » ou « sous-jacent » ou leurs équivalents ne signifient pas « au contact de ».

Les termes relatifs « sous » « sur », « surmonte », « sous-jacent » indiquent des positions relatives selon l'axe z du repère représenté sur les figures d'accompagnement.

Les termes « sensiblement », « environ », « de l'ordre de » signifient « à 10% près » ou, lorsqu'il s'agit d'une orientation angulaire, « à 10° près » et de préférence « à 5° près ». Ainsi, une direction sensiblement normale à un plan signifie une direction présentant un angle de 90±10° par rapport au plan.

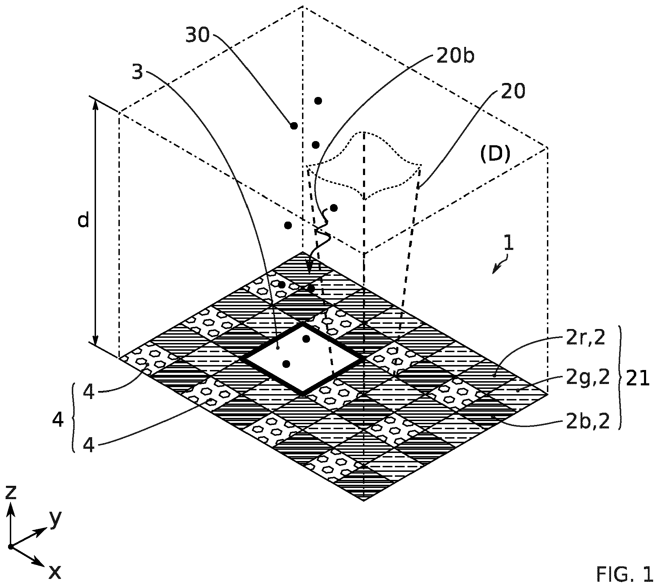

Un premier exemple de capteur selon l'invention va maintenant être décrit en référence à la figure 1. Le principe de fonctionnement de ce capteur 1 est le suivant :
Une ou plusieurs sources, par exemple des (O)LED 2g, 2b, 2r, forment une face d'émission 21 bordant ou entourant au moins partiellement le canal 3 dans lequel circulent les particules 30. Cette face d'émission 21 est tournée vers un côté D du capteur 1, par exemple une paroi 50 en regard des sources.

Un ou plusieurs photodétecteurs 4 forment une face de détection 41 bordant ou entourant au moins partiellement le canal 3. Cette face de détection 41 est tournée vers le même côté D du capteur 1 que la face d'émission 21.

Ainsi, la face de détection 41 ne peut pas recevoir directement des rayons lumineux 20 émis par la face d'émission 21. Les photodétecteurs 4 ne sont donc pas éblouis par les rayons lumineux 20.

Les faces d'émission 21 et de détection 41 peuvent être situées dans un même plan. Selon une autre possibilité, ces faces 21, 41 sont comprises entre deux plans parallèles séparés par une faible distance, par exemple inférieure à 20 µm. Les faces 21, 41 peuvent éventuellement être incurvées.

Au moins une partie des rayons lumineux 20 émis par la face d'émission 21 est dirigée vers le canal 3. Lorsqu'une particule 30 présente dans le canal 3 est éclairée par ces rayons lumineux 20 dirigés vers le canal 3, elle diffuse en partie ces rayons lumineux 20, dans une pluralité de directions autour de la particule 30. Une partie des rayons lumineux diffusés par la particule 30 est ainsi rétrodiffusée en direction de la face de réception 41 du capteur 1. Ces rayons lumineux rétrodiffusés 20b sont alors collectés par les photodétecteurs 4 et forment un signal de rétrodiffusion exploitable pour la détection et l'analyse de la particule 30. De façon avantageuse, ce signal de rétrodiffusion n'est pas pollué ou bruité par des signaux parasites provenant des rayons lumineux 20 non diffusés qui se dirigent à l'opposé des rayons lumineux rétrodiffusés 20b, vers le côté D du capteur 1. La sensibilité de détection du capteur 1 est ainsi améliorée. La réduction du bruit de fond lié à l'éblouissement permet ainsi de détecter de très petites particules, par exemple de taille inférieure à 11µm, voire inférieure à 100nm.

Le capteur 1 peut typiquement comprendre une paroi 50 en regard des sources 2, 2g, 2b, 2r, par exemple de manière à former un boîtier. Cette paroi 50 est de préférence configurée pour empêcher la réflexion des rayons lumineux 20 vers les photodétecteurs 4. Elle comprend de préférence un revêtement absorbant au moins 90% des rayons lumineux 20 et de préférence au moins 95% des rayons lumineux 20. Alternativement ou en combinaison, la paroi 50 est située à une distance d suffisamment grande, par exemple supérieure à 20 mm, des sources et/ou des photodétecteurs 4. Cela favorise la dispersion et/ou l'atténuation des rayons lumineux 20 non diffusés. Selon une autre possibilité, la paroi 50 est inclinée de façon à diriger d'éventuelles réflexions des rayons lumineux 20 en dehors du champ de vue des photodétecteurs 4.

Les photodétecteurs 4 peuvent typiquement être des photodiodes (PD) à base de silicium ou des photodiodes organiques (OPD). Ils peuvent être distribués sous forme d'une matrice de détection comme illustré à la figure 1. Ils sont typiquement associés à une électronique de lecture ou de commande à base de transistors complémentaires métal-oxyde-semiconducteur (CMOS). Selon une possibilité, les photodétecteurs 4 sont des pixels d'un imageur CMOS. Ils sont distribués autour du canal 3, qui peut se présenter sous forme d'un trou dans l'imageur CMOS. Les photodétecteurs 4 forment une face de détection 41 qui peut typiquement s'étendre dans un plan xy. Selon une autre possibilité, la face de détection 41 est incurvée. Elle n'est pas nécessairement plane. Les photodétecteurs 4 peuvent être en partie alternés avec les sources 2, 2g, 2b, 2r.

Comme illustré à la figure 1, les sources 2, 2g, 2b, 2r peuvent être disposées de façon à séparer les photodétecteurs 4. Elles peuvent être plus nombreuses que les photodétecteurs 4. L'arrangement spatial des sources 2, 2g, 2b, 2r et des photodétecteurs 4 autour du canal 3 peut être choisi en fonction des besoins, notamment de façon à augmenter le rapport signal sur bruit (S/B) du capteur 1. Cela permet d'optimiser l'analyse des particules 30. D'autres exemples d'arrangement des photodétecteurs 4 et des sources 2, 2g, 2b, 2r sont donnés dans la suite.

Les sources 2, 2g, 2b, 2r peuvent typiquement être des diodes électroluminescentes (LED) ou des diodes électroluminescentes organiques (OLED). Elles peuvent être distribuées sous forme d'une matrice d'émission comme illustré à la figure 1. Selon une possibilité, les sources 2, 2g, 2b, 2r sont des pixels 2 ou des sous-pixels 2g, 2b, 2r associés à une électronique CMOS. Les sources 2, 2g, 2b, 2r peuvent émettre selon différentes longueurs d'onde. Les sources 2b sont par exemple des sous-pixels bleus. Les sources 2r sont par exemple des sous-pixels rouges. Les sources 2g sont par exemple des sous-pixels verts. L'électronique de commande CMOS associée aux sources 2, 2g, 2b, 2r permet typiquement de piloter l'allumage et l'extinction de ces sources 2, 2g, 2b, 2r. Selon une possibilité avantageuse, les sources 2, 2g, 2b, 2r sont allumées ou éteintes indépendamment. Il est ainsi possible d'allumer et d'éteindre séquentiellement différents pixels ou sous-pixels lors du passage d'une particule 30 dans le canal 3. Par exemple, les sous-pixels bleus sont allumés tandis que les sous-pixels rouges et verts sont éteints. Cela permet d'obtenir un premier signal de rétrodiffusion donnant une première information sur la particule via un premier diagramme de diffusion selon une première longueur d'onde bleue. Les sous-pixels rouges sont ensuite allumés tandis que les sous-pixels bleus et verts sont éteints. Cela permet d'obtenir un deuxième signal de rétrodiffusion donnant une deuxième information sur la particule via un deuxième diagramme de diffusion selon une deuxième longueur d'onde rouge. Les sous-pixels verts sont ensuite allumés tandis que les sous-pixels bleus et rouges sont éteints. Cela permet d'obtenir un troisième signal de rétrodiffusion donnant une troisième information sur la particule via un troisième diagramme de diffusion selon une troisième longueur d'onde verte. En acquérant des diagrammes de diffusion à différentes longueurs d'onde λ, le diamètre moyen Φ des particules peut être calculé plus facilement. Ce diamètre moyen Φ peut notamment être calculé pour les très petites particules par une loi de Rayleigh liant l'intensité diffusée à Φ⁶/ λ⁴. L'acquisition de multiples diagrammes de diffusion à différentes longueurs d'onde λ permet également d'obtenir plus d'information sur la nature de la particule.

Selon une autre possibilité, les pixels 2 présentent tous sensiblement la même longueur d'onde et sont répartis régulièrement autour du canal 3. Des sous-ensembles de ces pixels 2 peuvent alors être allumés et éteints séquentiellement autour du canal de façon à éclairer la particule 30 sous différents angles de vue. La détection des différents signaux de rétrodiffusion permet alors de donner une information sur la position de la particule 30. L'allumage de sources 2, 2g, 2b, 2r distribuées spatialement sur la matrice d'émission permet également de scanner un volume plus grand de l'espace. Cela augmente la probabilité de détection d'une petite particule.

Selon une possibilité, le capteur 1 comprend une électronique CMOS sur laquelle sont co-intégrés des PD et des LED. Selon une possibilité, le capteur 1 comprend une électronique CMOS sur laquelle sont co-intégrés des OPD et des OLED. Ce dernier mode de réalisation permet notamment d'obtenir des sources 2 et des photodétecteurs 4 présentant respectivement des faces d'émission 21 et de détection 41 sensiblement dans un même plan. Des formes variées d'OPD et d'OLED peuvent en outre être réalisées. Les techniques de réalisation de ces OPD et OLED, par exemple par évaporation de molécules organiques pi-conjuguées au travers de masques d'ombrage ou par voie liquide, par exemple en sérigraphie ou impression jet d'encre, sont connues de l'homme du métier. Selon une possibilité, le capteur 1 comprend une électronique CMOS sur laquelle sont co-intégrés des OPD et des LED. Selon une possibilité, le capteur 1 comprend une électronique CMOS sur laquelle sont co-intégrés des PD et des OLED.

La dimension caractéristique des sources 2 et/ou des photodétecteurs 4, par exemple leur plus petite dimension dans le plan xy, peut être comprise entre 10 µm et 500 µm, typiquement entre 20 µm et 100 µm. Cela permet d'obtenir une bonne acceptance angulaire pour les photodétecteurs 4. Cela permet en outre de relâcher les contraintes de résolution spatiale pour les sources 2 et/ou les photodétecteurs 4. Cela augmente le nombre de technologies qui peuvent être utilisées pour la réalisation du capteur 1. Il est ainsi possible de recourir uniquement à des technologies basées sur des matériaux organiques (OPD et/ou OLED), ou à des technologies basées sur des matériaux inorganiques (PD et/ou LED), ou à des technologies hybrides mêlant des matériaux organiques et des matériaux inorganiques. Le pas séparant deux sources 2 et/ou photodétecteurs 4 adjacents peut être compris entre 1 µm et 200 µm. Cela permet également d'améliorer l'acceptance angulaire et/ou de relâcher les contraintes de résolution spatiale pour les sources 2 et/ou les photodétecteurs 4.

Le canal 3 peut être formé directement dans une zone de l'électronique CMOS prévue à cet effet, généralement sans pixels (source ou photodétecteur) et sans interconnexions (celles-ci étant déroutées à l'extérieur de la zone de canal), et délimitée par un anneau de scellement. Le canal 3 peut typiquement être percé au laser à l'intérieur de cet anneau de scellement. Selon une possibilité, plusieurs canaux 3 peuvent traverser les matrices d'émission et de détection.

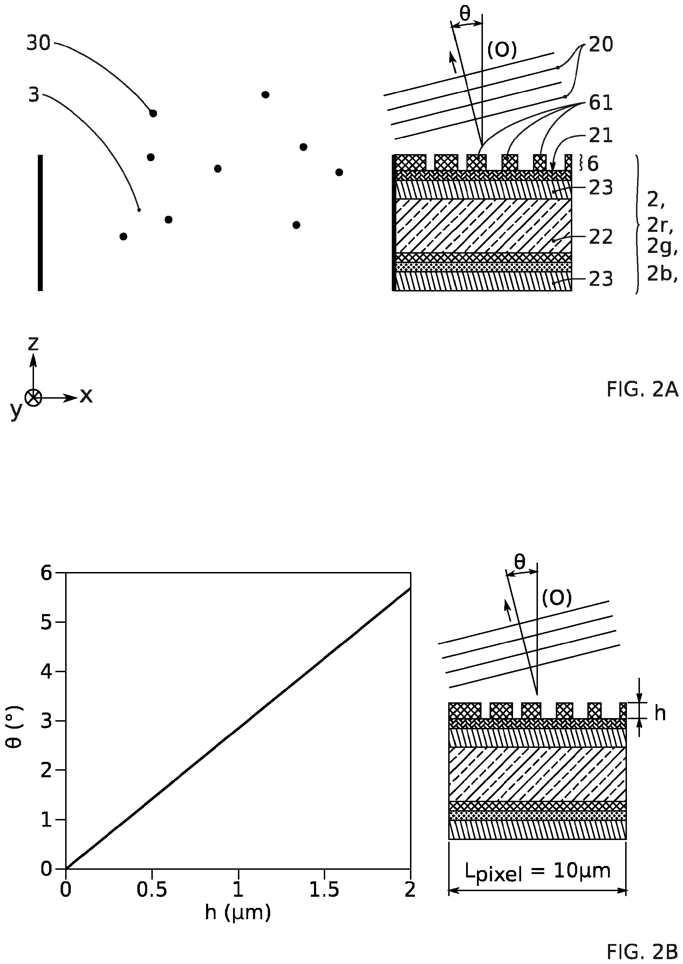

Comme illustré à la figure 2A, une source 2 LED ou OLED comprend typiquement une région active 22 où se produit des recombinaisons radiatives de porteurs de charge, et des régions d'injection des porteurs de charge reliées à des contacts électriques 23. De façon connue, d'autres couches, par exemple des couches de passivation, ou des couches antireflets, peuvent également être intégrées à ces sources 2.

Ce type de source 2 présente une émission lambertienne. Pour une face d'émission 21 s'étendant parallèlement au plan xy, la direction d'émission principale de la source (intensité maximale de l'indicatrice d'émission) est alors sensiblement parallèle à l'axe optique (O) de la source, c'est-à-dire selon l'axe z. Pour augmenter la quantité de rayons lumineux 20 dirigés vers le canal 3, une structure de déviation 6 peut être associée à une ou plusieurs sources 2, 2g, 2b, 2r.

La figure 2A illustre un premier exemple de structure de déviation 6 formée sur la face d'émission 21 d'une source de type LED ou OLED. Cette structure de déviation 6 peut se présenter sous la forme d'une couche nano-structurée à gradient d'indice effectif dans le plan xy. Elle comprend typiquement des motifs 61 de taille variable dans le plan xy. Les motifs 61 peuvent être à base d'oxyde de silicium SiO. Ces motifs 61 sont séparés les uns des autres par un pas également variable. Pour obtenir un gradient d'indice, le pas séparant les motifs ainsi que la taille des motifs sont inférieurs à la longueur d'onde principale de la source 2. De préférence, le pas et/ou la taille des motifs 61 varient de façon monotone et linéaire Cela permet d'obtenir un gradient d'indice linéaire. Un tel gradient d'indice permet avantageusement de dévier les rayons lumineux 20 d'un angle θ par rapport à l'axe optique (O) de la source 2.

La figure 2B présente la variation de l'angle θ en fonction de la hauteur h des motifs 61 de la structure de déviation 6. Pour une hauteur h des motifs 61 comprise entre 0,5µm et 1,5µm, il est ainsi possible d'obtenir une déviation d'un angle θ de l'ordre de 2° à 3°. Cela peut être suffisant pour augmenter la quantité de rayons lumineux 20 dirigés vers le canal 3. L'efficacité du capteur 1 est ainsi améliorée.

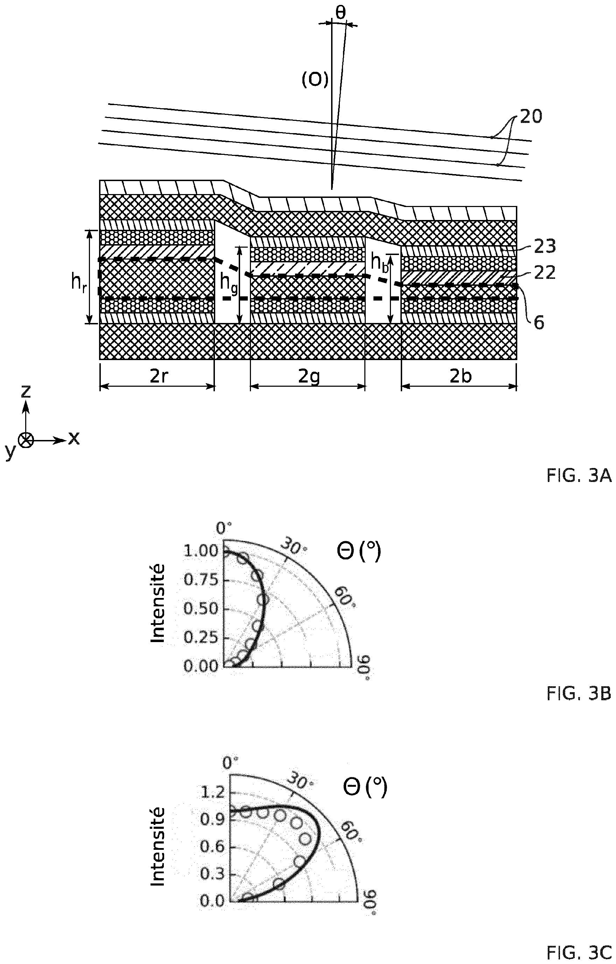

Selon une autre possibilité illustrée à la figure 3A, la déviation des rayons lumineux 20 peut être obtenue en faisant varier la hauteur de cavité de plusieurs sous-pixels 2r, 2g, 2b adjacents. Dans cet exemple la hauteur hᵣ du sous-pixel 2r est supérieure à la hauteur h_{g} du sous-pixel 2g, et la hauteur h_{g} du sous-pixel 2g est supérieure à la hauteur h_{b} du sous-pixel 2b. Cette variation de hauteur peut typiquement être obtenue en faisant varier l'épaisseur des couches constituant les différents sous-pixels 2r, 2g, 2b, par exemple les couches d'injection de porteurs. La structure de déviation 6 est ici intégrée au sein de plusieurs sous-pixels 2r, 2g, 2b adjacents.

Comme illustré aux figures 3B, 3C, l'indicatrice d'émission peut être significativement déformée en faisant varier les hauteurs de cavités hᵣ, h_{g}, h_{b}. Ainsi, en l'absence de variation de hauteur (hᵣ = h_{g} = h_{b}), la direction d'émission principale des sources 2r, 2g, 2b (intensité maximale de l'indicatrice d'émission) est sensiblement parallèle à l'axe optique (O) (θ = 0°, figure 3B). En faisant varier les hauteurs hᵣ, h_{g}, h_{b} des sources 2r, 2g, 2b comme illustré à la figure 3A, la direction d'émission principale des sources 2r, 2g, 2b (intensité maximale de l'indicatrice d'émission) est déviée d'un angle θ de l'ordre 45° par rapport à l'axe optique (O) (figure 3C).

Le lecteur pourra se reporter au document « Analysis and optimization on the angular color shift of RGB OLED displays, G. TAN et al., OPTICS EXPRESS 33629, Vol. 25, No. 26 (2017) » pour ajuster l'angle de déviation θ en fonction de l'épaisseur des couches d'injection de porteurs de sources OLED émettant selon différentes longueurs d'onde λ. Ce deuxième exemple de structure de déviation 6 permet avantageusement de dévier significativement les rayons lumineux 20, de plusieurs dizaines de degrés par rapport à l'axe optique (O).

Selon une autre possibilité (non illustrée), la structure de déviation 6 peut être un cristal photonique couplé à la source 2. Le document « Highly Directional Emission and Beam Steering from Organic Light-Emitting Diodes with a Substrate Diffractive Optical Element, S. Zhang et al., Adv. Optical Mater., 2, 343-347 (2014) » montre qu'une telle structure permet de modifier considérablement l'indicatrice d'émission, pour obtenir une émission anisotrope selon une direction d'émission formant un angle θ de l'ordre de 45° à 60° par rapport à l'axe optique (O). D'autres structures de déviation 6 peuvent encore être utilisées, par exemple une microlentille réfractive couplée à la source 2.

Dans ce qui suit, différents arrangements spatiaux des sources 2, 2r, 2g, 2b et des photodétecteurs 4 autour du canal 3 sont proposés. Ces arrangements visent à optimiser l'éclairage des particules et la détection des rayons lumineux rétrodiffusés par ces particules.

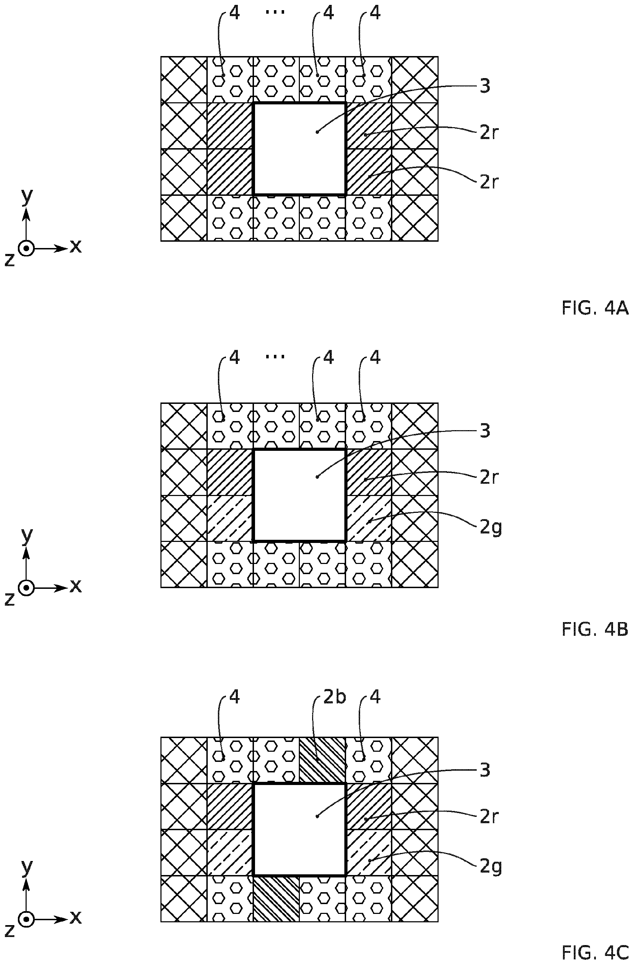

Les figures 4A à 4B présentent différentes configurations de matrices d'émission et de détection, en vue de dessus. Le canal 3 peut être partiellement bordé, par exemple sur deux bords opposés, par des pixels rouges 2r (figure 4A). Selon un autre exemple, le canal 3 peut être partiellement bordé, par exemple sur deux bords opposés, par des pixels rouges 2r et verts 2g (figure 4B). Le canal 3 peut être partiellement bordé, par exemple sur deux autres bords opposés, par des photodétecteurs 4. Les photodétecteurs 4 peuvent être deux fois plus nombreux que les pixels de couleur. Cela permet d'obtenir un diagramme de diffusion étendu. Cela permet d'obtenir une bonne sensibilité globale du capteur.

Selon un autre exemple, le canal 3 peut être partiellement bordé par des pixels rouges 2r, bleus 2b et verts 2g (figure 4C). Cela permet d'obtenir des diagrammes de diffusion à différentes longueurs d'onde.

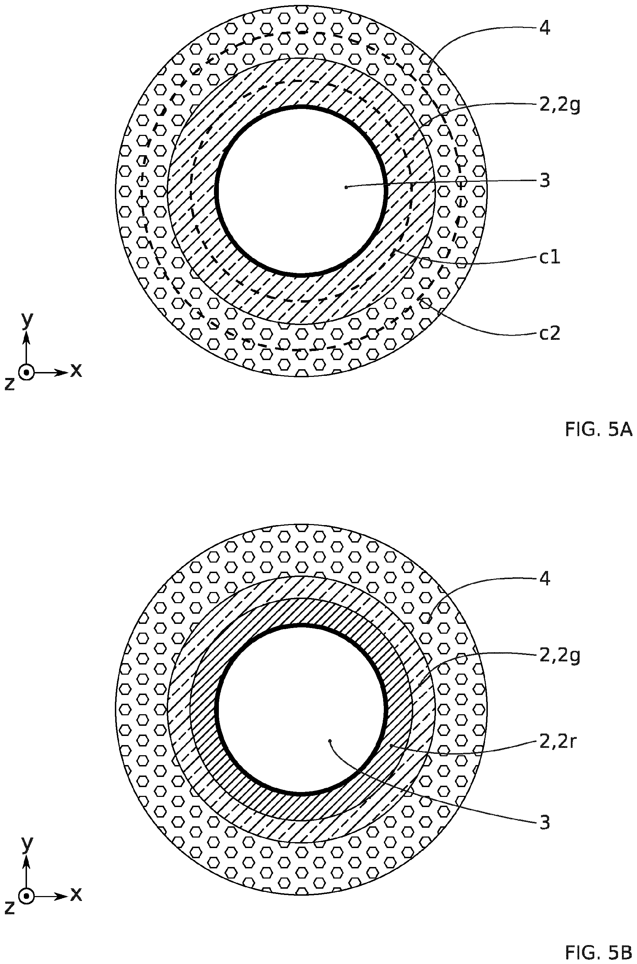

Les figures 5A à 5D présentent différentes configurations concentriques de sources 2, 2r, 2g, 2b et de photodétecteurs 4, en vue de dessus. Ces formes libres peuvent être obtenues par des technologies basées sur des matériaux organiques. Les sources sont ici typiquement des OLED et les photodétecteurs sont ici typiquement des OPD.

Le canal 3 peut être ainsi totalement entouré par une seule source OLED 2, 2g (figure 5A). Cela permet d'éclairer le canal 3 de façon homogène. Cette source OLED 2, 2g peut être totalement entourée par un seul OPD 4. De façon générale, la source OLED 2 peut s'étendre le long d'un circuit c1 et le photodétecteur OPD 4 peut s'étendre le long d'un circuit c2. Les circuits c1, c2 peuvent être circulaires ou ovales, ou peuvent présenter d'autres formes. Ils peuvent être concentriques.

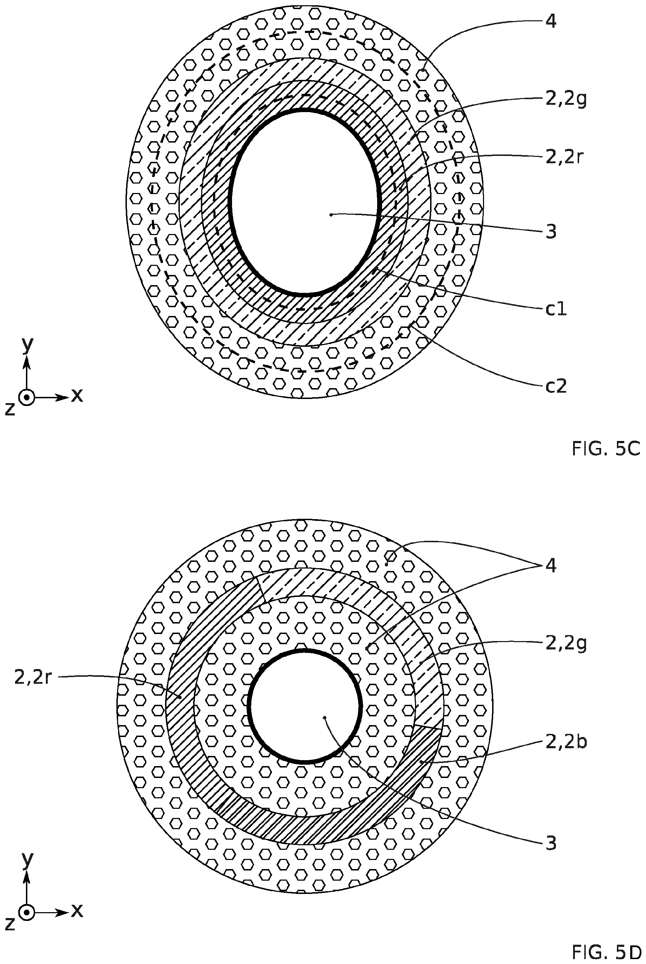

La figure 5B illustre un canal 3 totalement entouré par plusieurs sources OLED 2g, 2r circulaires et concentriques. La figure 5C illustre un canal 3 totalement entouré par plusieurs sources OLED 2g, 2r ovales et concentriques.

La figure 5D illustre un autre mode de réalisation où le canal 3 est totalement entouré par un premier OPD 4. Ce premier OPD 4 est entouré par un anneau d'OLED comprenant trois portions 2g, 2r, 2b de différentes couleurs. Cet anneau d'OLED 2g, 2r, 2b est lui-même entouré par un deuxième OPD 4.

En fonction des besoins, d'autres configurations sont envisageables à partir de ces quelques modes de réalisation illustrés aux figures 4A-4C et 5A-5D.

L'invention n'est pas limitée aux modes de réalisation décrits mais s'étend à tout mode de réalisation entrant dans la portée des revendications indépendantes.

## Revendications

1. Capteur optique (1) de particules comprenant :
• au moins une source (2, 2r, 2g, 2b) de lumière configurée pour émettre des rayons lumineux (20),
• au moins un canal (3) destiné à accueillir un fluide transportant au moins une particule (30), et à recevoir au moins en partie les rayons lumineux (20) émis par l'au moins une source (2, 2r, 2g, 2b), de sorte que lesdits rayons lumineux (20) soient en partie diffusés par l'au moins une particule (30),
• au moins un photodétecteur (4) apte à recevoir lesdits rayons lumineux (20) diffusés,
ledit l'au moins une source (2, 2r, 2g, 2b) présente une face d'émission (21) tournée vers un côté (D) du capteur et en ce que l'au moins un photodétecteur (4) présente une face de réception (41) tournée vers le même côté (D) du capteur (1), de sorte que les rayons lumineux reçus par l'au moins un photodétecteur sont des rayons lumineux rétrodiffusés (20b) par l'au moins une particule (30), pour au moins 90% d'entre eux, lesdites faces d'émission (21) et de réception (41) étant parallèles entre elles, et l'au moins une source (2, 2r, 2g, 2b) et l'au moins un photodétecteur (4) étant disposés autour de l'au moins un canal (3) et transversalement audit au moins un canal (3),
ledit capteur (1) étant **caractérisé en ce que** lesdites faces d'émission (21) et de réception (41) sont perpendiculaires à une direction principale d'écoulement du fluide transportant l'au moins une particule.

2. Capteur optique (1) selon la revendication précédente configuré de sorte que les rayons lumineux reçus par l'au moins un photodétecteur (4) sont uniquement des rayons lumineux rétrodiffusés (20b) par l'au moins une particule (30).

3. Capteur optique (1) selon l'une quelconque des revendications précédentes configuré de sorte que les rayons lumineux reçus par l'au moins un photodétecteur (4) ne sont pas réfléchis après avoir été diffusés par l'au moins une particule (30).

4. Capteur optique (1) selon l'une quelconque des revendications précédentes comprenant des parois (50) qui délimitent un volume à l'intérieur duquel s'étend le canal (3) et se propagent les rayons lumineux (20) émis par l'au moins une source, lesdites parois (50) étant configurées, en particulier par leur revêtement et/ou leur rugosité, de sorte à empêcher que des rayons lumineux (20) non diffusés par l'au moins une particule (30) ne parviennent à l'au moins un photodétecteur (4), pour au moins 95% d'entre eux.

5. Capteur optique (1) selon la revendication précédente, dans lequel les parois (50) absorbent au moins 95% des rayons lumineux (20) non diffusés par l'au moins une particule (30).

6. Capteur optique (1) selon l'une quelconque des revendications précédentes dans lequel les faces d'émission (21) et de réception (41) sont entièrement contenues dans un espace délimité par deux plans parallèles, le capteur optique (1) étant configuré de sorte que l'au moins une particule (30) soit située en dehors de cet espace lorsqu'elle diffuse les rayons lumineux (20).

7. Capteur optique (1) selon l'une quelconque des revendications précédentes dans lequel les faces d'émission (21) et de réception (41) sont planes et situées sensiblement dans un même plan.

8. Capteur optique (1) selon l'une quelconque des revendications précédentes dans lequel l'au moins une source (2, 2r, 2g, 2b) entoure entièrement l'au moins un canal (3), l'au moins une source (2, 2r, 2g, 2b) étant prise parmi une unique source (2) ou une pluralité de sources (2r, 2g, 2b).

9. Capteur optique (1) selon l'une quelconque des revendications précédentes comprenant une structure de déviation (6) et dans lequel les rayons lumineux (20) émis par l'au moins une source (2, 2r, 2g, 2b) sont déviés vers l'au moins un canal (3) par la structure de déviation (6).

10. Capteur optique (1) selon la revendication précédente dans lequel la structure de déviation (6) est formée sur la face d'émission (21) et présente un gradient d'indice de réfraction dans un plan parallèle à la face d'émission (21), ladite structure de déviation (6) étant choisie parmi un cristal photonique, une microlentille réfractive.

11. Capteur optique (1) selon la revendication 10 dans lequel l'au moins une source (2, 2r, 2g, 2b) comprend au moins deux émetteurs (2r, 2g, 2b) de lumière adjacents comprenant chacun une cavité d'émission de hauteur (hᵣ, h_{g}, h_{b}) différente, et dans lequel la structure de déviation (6) est formée par la différence de hauteurs (hᵣ, h_{g}, h_{b}) entre les cavités d'émission desdits au moins deux émetteurs de lumière adjacents.

12. Capteur optique (1) selon l'une quelconque des revendications précédentes dans lequel l'au moins une source (2, 2r, 2g, 2b) est une diode électroluminescente organique (OLED), et/ou dans lequel l'au moins un photoétecteur (4) est un photodétecteur organique (OPD).

13. Capteur optique (1) selon l'une quelconque des revendications précédentes dans lequel l'au moins une source (2, 2r, 2g, 2b) comprend une pluralité d'émetteurs (2, 2r, 2g, 2b) de lumière, lesdits émetteurs (2, 2r, 2g, 2b) étant agencés sous forme d'une matrice d'émission et dans lequel l'au moins un photodétecteur (4) comprend une pluralité de détecteurs de lumière (4), lesdits détecteurs (4) étant agencés sous forme d'une matrice de détection, lesdites matrices d'émission et de détection étant agencées de sorte que les émetteurs de lumière (2, 2r, 2g, 2b) soient alternés avec les détecteurs de lumière (4).

14. Capteur optique (1) selon l'une quelconque des deux revendications précédentes dans lequel la pluralité d'émetteurs (2r, 2g, 2b) de lumière comprend des premier, deuxième et troisième sous-ensembles d'émetteurs de lumière, les émetteurs (2r, 2g, 2b) de lumière desdits sous-ensembles étant configurés pour émettre des rayonnements lumineux présentant respectivement des première, deuxième et troisième longueurs d'onde différentes entre elles.

15. Capteur optique (1) selon l'une quelconque des trois revendications précédentes configuré pour permettre un allumage séquentiel et/ou une extinction séquentielle des émetteurs (2, 2r, 2g, 2b) de lumière.

## Patentansprüche

1. Optischer Partikelsensor (1), der Folgendes umfasst:
• mindestens eine Lichtquelle (2, 2r, 2g, 2b), die so konfiguriert ist, dass sie Lichtstrahlen (20) zu emittiert,
• mindestens einen Kanal (3), der dazu bestimmt ist, ein mindestens ein Partikel (30) transportierendes Fluid aufzunehmen und die von der mindestens einen Quelle (2, 2r, 2g, 2b) emittierten Lichtstrahlen zumindest teilweise zu empfangen, so dass die Lichtstrahlen (20) teilweise von dem mindestens einen Partikel (30) gestreut werden,
• mindestens einen Fotodetektor (4), der so ausgelegt ist, dass er die gestreuten Lichtstrahlen (20) empfängt,
wobei die mindestens eine Quelle (2, 2r, 2g, 2b) eine Emissionsfläche (21) aufweist, die einer Seite (D) des Sensors zugewandt ist, und der mindestens eine Fotodetektor (4) eine Empfangsfläche (41) aufweist, die derselben Seite (D) des Sensors (1) zugewandt ist, so dass die von dem mindestens einen Fotodetektor empfangenen Lichtstrahlen zu mindestens 90 % von dem mindestens einen Partikel (30) zurückgestreute Lichtstrahlen (20b) sind, wobei die Emissions- (21) und die Empfangsfläche (41) parallel zueinander liegen, und die mindestens eine Quelle (2, 2r, 2g, 2b) und der mindestens eine Fotodetektor (4) um den mindestens einen Kanal (3) und quer zu dem mindestens einen Kanal (3) angeordnet sind,
wobei der Sensor (1) **dadurch gekennzeichnet ist, dass** die Emissionsfläche (21) und die Empfangsfläche (41) senkrecht zu einer Hauptströmungsrichtung des das mindestens ein Partikel transportierenden Fluids liegen.

2. Optischer Sensor (1) nach dem vorhergehenden Anspruch, der so konfiguriert ist, dass die von dem mindestens einen Fotodetektor (4) empfangenen Lichtstrahlen nur von dem mindestens einen Partikel (30) zurückgestreute Lichtstrahlen (20b) sind.

3. Optischer Sensor (1) nach einem der vorhergehenden Ansprüche, der so konfiguriert ist, dass die von dem mindestens einen Fotodetektor (4) empfangenen Lichtstrahlen nicht reflektiert werden, nachdem sie von dem mindestens einen Partikel (30) gestreut wurden.

4. Optischer Sensor (1) nach einem der vorhergehenden Ansprüche, der Wände (50) umfasst, die ein Volumen begrenzen, in dem sich der Kanal (3) erstreckt und in dem sich die von der mindestens einen Quelle emittierten Lichtstrahlen (20) ausbreiten, wobei die Wände (50) so konfiguriert sind, dass sie vor allem durch ihre Beschichtung und/oder ihre Rauheit verhindern, dass mindestens 95 % der Lichtstrahlen (20), die nicht von dem mindestens einen Partikel (30) gestreut werden, den mindestens einen Fotodetektor (4) erreichen.

5. Optischer Sensor (1) nach dem vorhergehenden Anspruch, wobei die Wände (50) mindestens 95 % der Lichtstrahlen (20) absorbieren, die nicht von dem mindestens einen Partikel (30) gestreut werden.

6. Optischer Sensor (1) nach einem der vorhergehenden Ansprüche, wobei die Emissionsfläche (21) und die Empfangsfläche (41) vollständig in einem durch zwei parallele Ebenen begrenzten Raum enthalten sind, wobei der optische Sensor (1) so konfiguriert ist, dass sich das mindestens eine Partikel (30) außerhalb dieses Raums befindet, wenn es die Lichtstrahlen (20) streut.

7. Optischer Sensor (1) nach einem der vorhergehenden Ansprüche, wobei die Emissions- (21) und die Empfangsfläche (41) planar sind und sich im Wesentlichen in derselben Ebene befinden.

8. Optischer Sensor (1) nach einem der vorhergehenden Ansprüche, wobei die mindestens eine Quelle (2, 2r, 2g, 2b) den mindestens einen Kanal (3) vollständig umgibt, wobei die mindestens eine Quelle (2, 2r, 2g, 2b) eine einzelne Quelle (2) oder eine Vielzahl von Quellen (2r, 2g, 2b) umfasst.

9. Optischer Sensor (1) nach einem der vorhergehenden Ansprüche, der eine Ablenkstruktur (6) umfasst und wobei die von der mindestens einen Quelle (2, 2r, 2g, 2b) emittierten Lichtstrahlen (20) durch die Ablenkstruktur (6) in Richtung des mindestens einen Kanals (3) abgelenkt werden.

10. Optischer Sensor (1) nach dem vorhergehenden Anspruch, wobei die Ablenkstruktur (6) auf der Emissionsfläche (21) ausgebildet ist und einen Brechungsindexgradienten in einer Ebene, die parallel zur Emissionsfläche (21) liegt, aufweist, wobei die Ablenkstruktur (6) aus einem photonischen Kristall und einer brechenden Mikrolinse ausgewählt ist.

11. Optischer Sensor (1) nach Anspruch 10, wobei die mindestens eine Quelle (2, 2r, 2g, 2b) mindestens zwei benachbarte Lichtemitter (2r, 2g, 2b) umfasst, die jeweils einen Emissionshohlraum mit unterschiedlicher Höhe (hᵣ, h_{g}, h_{b}) umfassen, und wobei die Ablenkstruktur (6) durch den Höhenunterschied (hᵣ, h_{g}, h_{b}) zwischen den Emissionshohlräumen der mindestens zwei benachbarte Lichtemitter gebildet wird.

12. Optischer Sensor (1) nach einem der vorhergehenden Ansprüche, wobei die mindestens eine Quelle (2, 2r, 2g, 2b) eine organische Leuchtdiode (OLED) ist und/oder wobei der mindestens eine Fotodetektor (4) ein organischer Fotodetektor (OPD) ist.

13. Optischer Sensor (1) nach einem der vorhergehenden Ansprüche, wobei die mindestens eine Quelle (2, 2r, 2g, 2b) eine Vielzahl von Lichtemittern (2, 2r, 2g, 2b) umfasst, wobei die Lichtemitter (2, 2r, 2g, 2b) in Form einer Emissionsmatrix angeordnet sind, und wobei der mindestens eine Fotodetektor (4) eine Vielzahl von Lichtdetektoren (4) umfasst, wobei die Lichtdetektoren (4) in Form einer Detektionsmatrix angeordnet sind, wobei die Emissionsmatrix und die Detektionsmatrix so angeordnet sind, dass sich die Lichtemitter (2, 2r, 2g, 2b) mit den Lichtdetektoren (4) abwechseln.

14. Optischer Sensor (1) nach einem der beiden vorhergehenden Ansprüche, wobei die Vielzahl von Lichtemittern (2r, 2g, 2b) erste, zweite und dritte Untergruppen von Lichtemittern umfasst, wobei die Lichtemitter (2r, 2g, 2b) der Untergruppen so konfiguriert sind, dass sie Lichtstrahlungen mit jeweils ersten, zweiten und dritten Wellenlängen emittieren, die voneinander verschieden sind.

15. Optischer Sensor (1) nach einem der drei vorhergehenden Ansprüche, der so konfiguriert ist, dass er ein sequentielles Einschalten und/oder ein sequentielles Ausschalten der Lichtemitter (2, 2r, 2g, 2b) ermöglicht.

## Claims

1. An optical particle sensor (1) comprising:
- at least one light source (2, 2r, 2g, 2b) configured to emit light rays (20),
- at least one channel (3) for accommodating a fluid transporting at least one particle (30), and for receiving at least some of the light rays (20) emitted by the at least one source (2, 2r, 2g, 2b), so that said light rays (20) are partly scattered by the at least one particle (30),
- at least one photodetector (4) able to receive said scattered light rays (20),
said at least one source (2, 2r, 2g, 2b) has an emission face (21) facing one side (D) of the sensor and in that the at least one photodetector (4) has a reception face (41) facing the same side (D) of the sensor (1), so that light rays received by the at least one photodetector are light rays (20b) backscattered by the at least one particle (30), for at least 90% of them, said emission (21) and reception (41) faces being parallel to each other, and the at least one source (2, 2r, 2g, 2b) and the at least one photodetector (4) being disposed around the at least one channel (3) and transversely to said at least one channel (3),
said sensor (1) being **characterised in that** said emission (21) and reception (41) faces are perpendicular to a main direction of flow of the fluid transporting the at least one particle.

2. The optical sensor (1) according to the preceding claim, configured so that light rays received by the at least one photodetector (4) are only light rays (20b) backscattered by the at least one particle (30).

3. The optical sensor (1) according to any of the preceding claims, configured so that light rays received by the at least one photodetector (4) are not reflected after being scattered by the at least one particle (30).

4. The optical sensor (1) according to any of the preceding claims, comprising walls (50) which delimit a volume inside which the channel (3) extends and the light rays (20) emitted by the at least one source propagate, said walls (50) being configured, in particular by their coating and/or their roughness, so as to prevent light rays (20) not scattered by the at least one particle (30) from reaching the at least one photodetector (4), for at least 95% of them.

5. The optical sensor (1) according to the preceding claim, wherein the walls (50) absorb at least 95% of the light rays (20) not scattered by the at least one particle (30).

6. The optical sensor (1) according to any of the preceding claims, wherein the emission (21) and reception (41) faces are entirely contained in a space delimited by two parallel planes, the optical sensor (1) being configured so that the at least one particle (30) is located outside this space when it scatters the light rays (20).

7. The optical sensor (1) according to any of the preceding claims, wherein the emission (21) and reception (41) faces are planar and located substantially in the same plane.

8. The optical sensor (1) according to any of the preceding claims, wherein the at least one source (2, 2r, 2g, 2b) completely surrounds the at least one channel (3), the at least one source (2, 2r, 2g, 2b) being taken from a single source (2) or a plurality of sources (2r, 2g, 2b).

9. The optical sensor (1) according to any of the preceding claims, comprising a deflection structure (6) and wherein the light rays (20) emitted by the at least one source (2, 2r, 2g, 2b) are deflected towards the at least one channel (3) by the deflection structure (6).

10. The optical sensor (1) according to the preceding claim, wherein the deflection structure (6) is formed on the emission face (21) and has a refractive index gradient in a plane parallel to the emission face (21), said deflection structure (6) being selected from a photonic crystal and a refractive microlens.

11. The optical sensor (1) according to claim 10, wherein the at least one source (2, 2r, 2g, 2b) comprises at least two adjacent light emitters (2r, 2g, 2b) each comprising an emission cavity with a different height (hᵣ, h_{g}, h_{b}), and wherein the deflection structure (6) is formed by the difference in heights (hᵣ, h_{g}, h_{b}) between the emission cavities of said at least two adjacent light emitters.

12. The optical sensor (1) according to any of the preceding claims, wherein the at least one source (2, 2r, 2g, 2b) is an organic light emitting diode (OLED), and/or wherein the at least one photodetector (4) is an organic photodetector (OPD).

13. The optical sensor (1) according to any of the preceding claims, wherein the at least one source (2, 2r, 2g, 2b) comprises a plurality of light emitters (2, 2r, 2g, 2b), said emitters (2, 2r, 2g, 2b) being arranged in the form of an emission matrix and wherein the at least one photodetector (4) comprises a plurality of light detectors (4), said detectors (4) being arranged as a detection matrix, said emission and detection matrices being arranged so that the light emitters (2, 2r, 2g, 2b) are alternating with the light detectors (4).

14. The optical sensor (1) according to any of the two preceding claims, wherein the plurality of light emitters (2r, 2g, 2b) comprise first, second and third sub-assemblies of light emitters, the light emitters (2r, 2g, 2b) of said sub-assemblies being configured to emit light radiations having respectively first, second and third wavelengths different from each other.

15. The optical sensor (1) according to any of the three preceding claims, configured to allow sequential switching on and/or sequential switching off of the light emitters (2, 2r, 2g, 2b).
